# EUROPÄISCHE PATENTSCHRIFT

(11) **EP 1 382 861 B1**
(45) Veröffentlichungstag und Bekanntmachung des Hinweises auf die Patenterteilung: **20.09.2006**
(21) Anmeldenummer: 03015342.3
(22) Anmeldetag: 08.07.2003
(51) Int. Cl.: F16B 2/10, F16B 45/02, F16L 23/02, F16L 37/12, B65D 45/34

(54) **Vorrichtung zum Schliessen zweier Bauteile**
Device for locking two elements together
Dispositif pour verrouiller deux éléments constructifs ensemble

(30) Priorität: 13.07.2002 DE 10231723
(43) Veröffentlichungstag der Anmeldung: 21.01.2004
(73) Patentinhaber: KUKA Roboter GmbH, 86165 Augsburg (DE)
(72) Erfinder: Karlinger, Stefan, 86199 Augsburg (DE)
(74) Vertreter: Lempert, Jost

(56) Entgegenhaltungen:
- EP-A- 0 414 092
- DE-C- 805 252
- US-A- 4 094 047

## Beschreibung

Die Erfindung betrifft eine Schließvorrichtung nach dem Oberbegriff des Anspruchs 1 sowie eine Schelle nach dem Oberbegriff des Anspruchs 20.

Es ist oftmals wünschenswert zwei Bauteile in einfacher und bequemer Weise zu schließen, so dass sie in einer Schließstellung sicher gehalten werden, aber auch zerstörungsfrei wieder geöffnet werden können. Dies gilt beispielsweise für eine Schelle bestehend aus zwei Schellenteilen, die an einer Kante gelenkig aneinander angelenkt sind, während die diametral gegenüberliegenden Kanten der Schellenteile zum seitlichen Einbringen von Leitungen, Rohren oder Schläuchen geöffnet, aber zum Halten derselben mittels einer genannten Vorrichtung zum Schließen geschlossen, d.h. zusammengezogen und miteinander verriegelt werden.

Derartige Schließvorrichtungen sind oft nicht hinreichend stabil und bestehen aus einer Vielzahl von Einzelteilen, die sich leicht lösen und damit verloren gehen können. Darüber hinaus bauen derartige Schließvorrichtungen in der Tiefe sehr hoch oder aber sie sind für breite Bauteile zu schmal, so dass zu einem gleichmäßigen Schließen der Bauteile mehrere Schließvorrichtungen nebeneinander angeordnet werden müssen.

Die US-A-4 094 047 zeigt einen Schnappbügel mit zwei in einem spitzen Winkel zueinander stehenden Hebelarmen, deren einer schwenkbar an einem Grundkörper angelenkt ist, während deren anderer an seinem freien Ende einen Durchbruch aufweist, vielmehr an einem Schließstift des Grundteils angreifen kann. Zum Öffnen ist der Durchbruch des freien Hebelarms entgegen einer in einem Langloch am angelenkten Hebelarm befindlichen Feder von dem Stift fortzudrücken, woraufhin dann der Hebel in Öffnungsstellung geschwenkt werden kann.

Dieser bekannte Schnappbügel wird bei Segelschiffen eingesetzt, um Tücher an Seilen zu halten, wobei der Hebel durch Ösen der Tücher hindurchgreifen muss.

Die DE-C-805 252 zeigt einen Spannringverschluss für Trommeln, Fässer oder dergleichen, bei dem zwei parallel zueinander ausgerichtete Nasen 7, 8 in durch Bügel 2 gebildete Ösen 4 hindurchgreifen und an ihren Enden Durchbrüche aufweisen, mittels derer sie verplombt werden können. Auch diese Druckschrift zeigt nicht einen Hebelarm mit zwei Hebeln, von denen einer an einem Grundteil festgelegt ist, während ein rechtwinklig hierzu ausgerichteter mit seinem freien Ende in Schließstellung am Grundteil befestigbar ist.

Der Erfindung liegt daher die Aufgabe zugrunde, eine Schließeinrichtung zu schaffen, die zunächst eine möglichst geringe Bauhöhe bei ausreichender Breite aufweist, so dass ein gleichmäßiges Schließen über eine hinreichende Breite möglich ist. Darüber hinaus soll die Vorrichtung aus wenigen Einzelteilen bestehen, konstruktiv einfach und damit preiswert sein, gleichzeitig aber ein stabiles und sicheres Schließen ermöglichen, wobei ein unbeabsichtigtes Öffnen ausgeschlossen sein soll.

Erfindungsgemäß wird die genannte Aufgabe mit einer Schließvorrichtung der eingangs genannten Art gelöst, die die kennzeichnenden Merkmale des Anspruchs 1 aufweist. Weiter ist zur Lösung der Aufgabe eine Schelle gemäß Anspruch 20 ausgebildet.

In bevorzugter Ausgestaltung ist dabei vorgesehen, dass insbesondere ein dem ersten Hebelarm abgewandter Hebelschnitt des zweiten Hebelarms auf den ersten Hebelarm zugerichtet sein kann, so dass der Relativwinkel zwischen dem ersten Hebelarm und dem abgewandten Abschnitt weniger als 90° beträgt, beispielsweise zwischen 80 und 87° liegen kann.

In weiterer bevorzugter Ausgestaltung ist vorgesehen, dass der erste Hebelarm über einen kurzen abgewinkelten Ansatz am Grundkörper angelenkt ist, wobei insbesondere der abgewinkelte Ansatz im wesentlichen parallel zum zweiten Hebelarm verläuft. Hierdurch wird sichergestellt, dass in einer Schließstellung der erste Hebelarm im wesentlichen parallel zu einer Oberkante des Grundkörpers verlaufen kann, so dass zwischen beiden ein Zwischenraum besteht, in der das Widerlager des zweiten zu schließenden Bauteils eingreifen und der erste Hebelarm zum Schließen der Bauteile an diesem Widerlager angreifen kann.

In weiterer bevorzugter Ausgestaltung der erfindungsgemäßen Vorrichtung ist vorgesehen, dass der abgewinkelte Ansatz mit seinem freien Ende am Grundkörper angelenkt ist.

Eine äußerst bevorzugte Ausgestaltung sieht vor, dass der abgewinkelte Ansatz mit einem exzentrischen Nocken im Bereich der Anlenkung versehen ist, der in maximaler Offenstellung des Hebels die Oberkante des Grundkörpers überragt. Hierdurch wird erreicht, dass, wenn die erfindungsgemäße Vorrichtung vollständig geöffnet wird, der Nocken das zweite Bauteil vom ersten Bauteil, an dem die erfindungsgemäße Schließvorrichtung angebracht ist, abdrücken kann und damit zwischen beiden Bauteilen ein Zwischenraum entsteht, in den eingegriffen werden kann, um die beiden Bauteile vollständig voneinander fortzuschwenken.

In weiterer bevorzugter Ausgestaltung ist eine Sperreinrichtung in Form eines parallel zur Schwenkachse des Hebels ausgerichteten, nachgiebig gelagerten Stiftes und eine diesen umgreifende Bohrung am freien Ende des Hebelarms vorgesehen. Hierdurch wird eine sichere Verriegelung der erfindungsgemäßen Vorrichtung und damit der zu schließenden Bauteile geschaffen, die nur durch Einsatz eines zusätzlichen Werkzeugs, wie eines Stabes oder Schraubenziehers, der in die Öffnung zum erneuten Niederdrücken des Stiftes zwecks Öffnen der erfindungsgemäßen Vorrichtung eingreift, geöffnet werden kann.

Eine weitere bevorzugte Ausgestaltung der Erfindung sieht vor, dass das freie Ende des zweiten Hebels einen abgewinkelten Ansatz aufweist, wobei der Abstand der freien Kante des Ansatzes der Höhe des aus einer Tragplatte des Grundkörpers ragenden Stiftes entspricht. Hierdurch wird erreicht, dass der Stift alleine beim Niederdrücken des schwenkbaren Hebels zum Schließen in eine Freigabestellung zurückgedrückt wird, aus der er dann, sobald die erwähnte Bohrung konzentrisch zu ihm angeordnet ist, in diese zurückspringen kann, um den Schließ- und Sperrvorgang zu vollenden.

Das Schließen der erfindungsgemäßen Schließvorrichtung wird dadurch erleichtert, dass der zweite Hebelarm an seinem freien Ende einen Griffansatz aufweist. Der Grundkörper der erfindungsgemäßen Schließvorrichtung kann in verschiedenartiger Weise ausgebildet sein.

Eine bevorzugte Ausgestaltung sieht vor, dass der Grundkörper zumindest eine flache Tragplatte aufweist, an der der Hebel angelenkt ist, wobei in bevorzugter Weise ebenfalls vorgesehen ist, dass der Hebel aus Flachmaterial besteht.

In Weiterbildung des erfindungsgemäßen Grundkörpers kann vorgesehen sein, dass der Grundkörper eine Abdeckplatte aufweist, die auf der der Grundplatte abgewandten Seite des Hebels angeordnet ist und insbesondere auch zwischen Grund- und Abdeckplatte eine Distanzplatte angeordnet ist. Die Stärke des Hebels liegt dabei im wesentlichen in der Größenordnung der Stärkung der Distanzplatte oder etwas (im Toleranzbereich) unter dieser.

Die erfindungsgemäße Vorrichtung, d.h. Grundkörper und/oder Hebel können aus verschiedenartigen Materialien bestehen, sie bestehen vorzugsweise aus Kunststoff und/oder Metall.

Ebenfalls kann die Verbindung der Einzelteile des Grundkörpers in verschiedenartiger Weise erfolgen; hier kommen Verkleben, Verschweißen, Vernieten oder aber Verschrauben in Frage.

Eine weitere äußerst bevorzugte Ausgestaltung der Erfindung sieht vor, dass die Schwenkachse des Schließhebels senkrecht zu einer Schwenkachse der zu schließenden Bauteile gerichtet ist.

Der konkrete Einsatz der Erfindung erfolgt bei einer Schelle, wobei eine solche dadurch gekennzeichnet ist, dass sie eine Schließvorrichtung nach Anspruch 20 aufweist. In bevorzugter Ausgestaltung ist dabei wiederum vorgesehen, dass die Schwenkachse des Schließhebels senkrecht zu der oder den Anlenkachsen der beiden Bauteile der Schelle aneinander ausgerichtet ist.

Insgesamt wird durch die Erfindung eine Vorrichtung zum Schließen zweier Bauteile, wie der beiden Teile einer Schelle geschaffen, die konstruktiv einfach ausgebildet ist und wenig Einzelteile aufweist, die darüber hinaus eine möglichst geringe Bauhöhe aufweist, aber eine hinreichende Breite über die Breite der zu schließenden Bauteile, wie der Schelle, so dass ein gleichmäßiger Schließdruck über die Breite der Bauteile hingegeben ist.

Insbesondere ergeben sich mit der erfindungsgemäßen Vorrichtung die folgenden Vorteile:
Beim Schließen erhöht sich die Schließkraft laufend durch die Hebelwirkung der erfindungsgemäß vorgesehenen Hebelausgestaltung.
Im geschlossenen Zustand ist der Verschluss über die Lagerstelle des Winkelhebels und den Sperrstift zweifach verriegelt.
Beim Schließen wird der Sperrstift durch eine Schrägung am Haken automatisch herabgedrückt.
Zum Öffnen muss der Sperrstift mittels eines spitzen Gegenstandes, wie eines Schraubenziehers oder dergleichen zurückgedrückt werden, um eine Entriegelung zu ermöglichen.
Wenn der Hebel vollständig geöffnet ist, wird das zweite Bauteil (Gegenlager) durch einen am Hebel ausgebildeten Exzenter aufgedrückt
Weitere Vorteile und Merkmale der Erfindung ergeben sich aus den Ansprüchen und aus der nachfolgenden Beschreibung, in der ein bevorzugtes Ausführungsbeispiel der Erfindung unter Bezugnahme auf die Zeichnungen im einzelnen erläutert ist. Dabei zeigt:
   - Fig. 1: die erfindungsgemäße Vorrichtung zum Schließen zweier Bauteile in Öffnungsstellung;
   - Fig. 2: die erfindungsgemäße Vorrichtung in Schließstellung;
   - Fig. 3: die erfindungsgemäße Vorrichtung angebracht an einer Schelle mit zwei Schellenhälften als zueinander zu schließende Bauteile, in einer ersten Schließ-Zwischenstellung;
   - Fig. 4: eine Darstellung entsprechend der Fig. 3 in einer fortgeschrittenen Schließ-Zwischenstellung;
   - Fig. 5: eine Darstellung entsprechend der Fig. 3 in vollständiger Schließstellung der erfindungsgemäßen Vorrichtung entsprechend Fig. 2.

Die erfindungsgemäße Vorrichtung 1 weist zunächst einen Grundkörper 2 sowie einen an diesem schwenkbar angelenkten Hebel 3 auf. Der Grundkörper 2 besteht aus einer flachen Tragplatte 2.1, einer Distanzplatte 2.2 und einer Abdeckplatte 2.3. Die drei Platten sind fest miteinander verbunden, beispielsweise durch Verkleben, Verschweißen, Vernieten mittels Nieten 2.4. Die Distanzplatte 2.2 weist gegenüber Grund- und Abdeckplatte 2.1, 2.3 - hier - im linken oberen Bereich eine Ausnehmung 2.4 auf, in die der Schwenkhebel 3 eingreift. Der Schwenkhebel 2.3 besteht aus zwei Haupt-Hebelarmen 3.1, 3.2, die bei 3.3 etwa rechtwinklig miteinander verbunden sind bzw. ineinander übergehen. Ein dem ersten Hebelarm 3.1 abgewandter Abschnitt 3.4 des zweiten Hebelarmes ist gegenüber dem rechten Winkel zurückgeneigt ausgebildet, so dass er mit dem Hebelarm 3.1 einen Winkel von weniger als 90°, beispielsweise zwischen 80 und 87° einschließt. Der Grundkörper 2 ist mittels Schraubenelementen 2.5 an einem zu schließenden Bauteil befestigbar.

Der erste Hebelarm 3.1 weist an seinem dem zweiten Hebelarm 3.2 abgewandten Ende einen Ansatz 3.5 auf, der in die Ausnehmung 2.4 der Distanzplatte 2.2 eingreift und mittels zum Beispiel einer Niete gelenkig am Grundkörper 2 - genau an der Grundplatte 2.1 - schwenkbar angelenkt ist. Der Ansatz 3.5 ist an seinem dem ersten Hebelarm 3.1 abgewandten Ende mit einem exzentrischen Nocken 3.6 versehen. Dieser Nocken dient dazu ein Widerlager des zweiten Bauteils der beiden miteinander zu schließenden Bauteile beim Öffnen vom Grundkörper 2 und damit das erste Bauteil, an dem dieser befestigt ist, fortzudrücken.

Der zweite Hebelarm 3.2 weist an seinem dem ersten Hebelarm 3.1 abgewandten Ende eine Bohrung 3.6 als Teil einer Sperreinrichtung, einen Betätigungsansatz 3.7 sowie einen aus der Ebene des Hebels 3 leicht abgewinkelten Ansatz 3.8 auf. An der Tragplatte 2.1 ist als weiterer Teil der Sperreinrichtung ein in seiner Axialrichtung elastisch gelagerter Stift 2.6 angebracht, der beispielsweise durch eine in einem Gehäuse 2.7 angeordneten Feder über die der Abdeckplatte 2.3 zugewandte Fläche der Tragplatte 2.1 herausgedrückt wird.

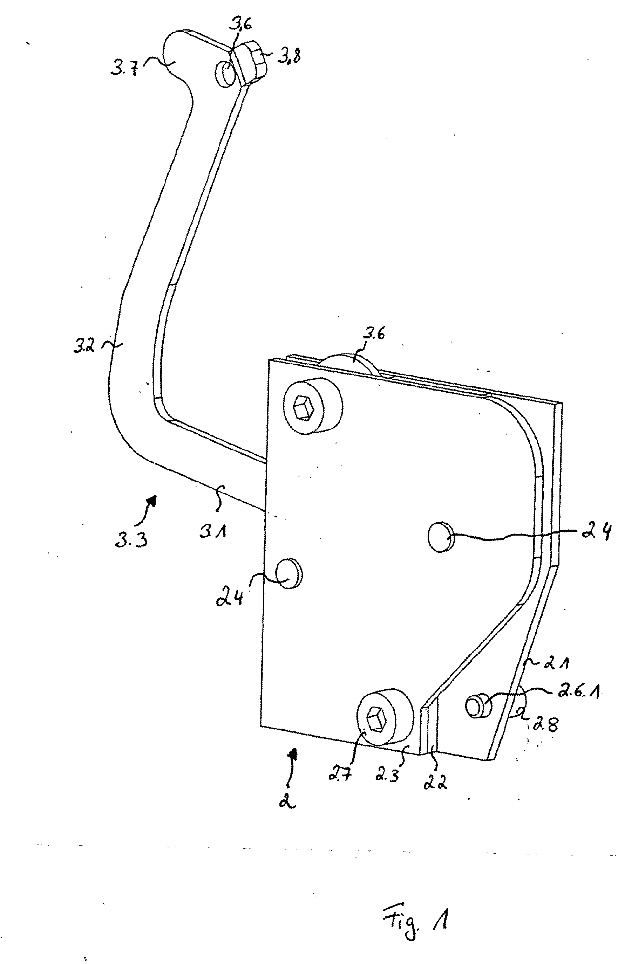

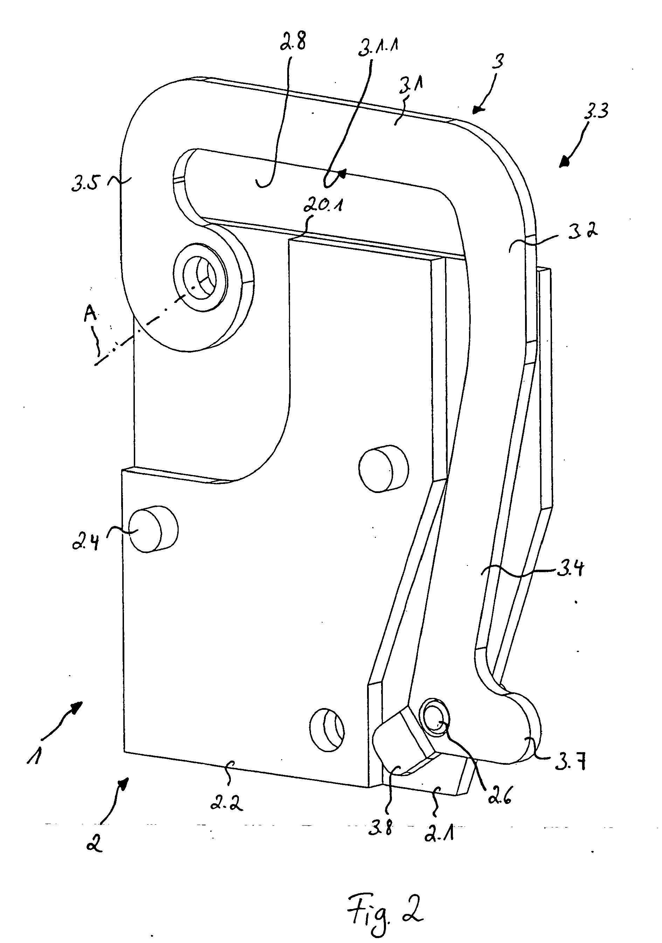

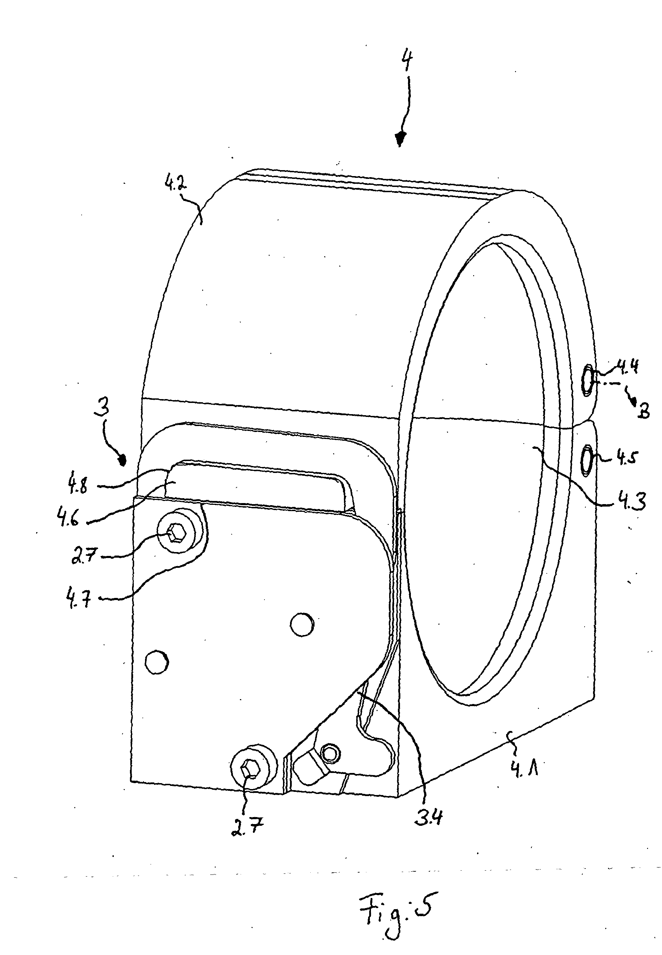

Wie sich aus Vorstehendem ergibt, ist der Schwenkhebel 3 in der Ebene der Distanzplatte 2.2 angeordnet und weist eine im wesentlichen dieser entsprechenden Stärke auf. Das freie Ende des Ansatzes 3.8 ragt etwa bis auf die Höhe der Fase 2.6.1 des Stiftes 2.6. Wird der Hebel 3 aus seiner in Fig. 1 dargestellten Öffnungsstellung in seine Schließstellung gebracht (Fig. 2, 5), so streift das freie Ende des Ansatzes 8 zunächst über die Fase 2.6.1 des Stiftes 2.6 und drückt diesen bei weiterer Schließbewegung entgegen der auf ihn wirkenden Feder nach hinten, in die Tragplatte 2.1 hinein, bis die Bohrung 3.6 in konzentrische Stellung zur Stiftposition gelangt, woraufhin der Stift unter der Einwirkung der auf ihn wirkenden Feder in die Bohrung 3.6 hinein und damit seine Ausgangsstellung hineinschnappen kann. Damit ist die erfindungsgemäße Vorrichtung zum Schließen zweier Bauteile zuverlässig geschlossen.

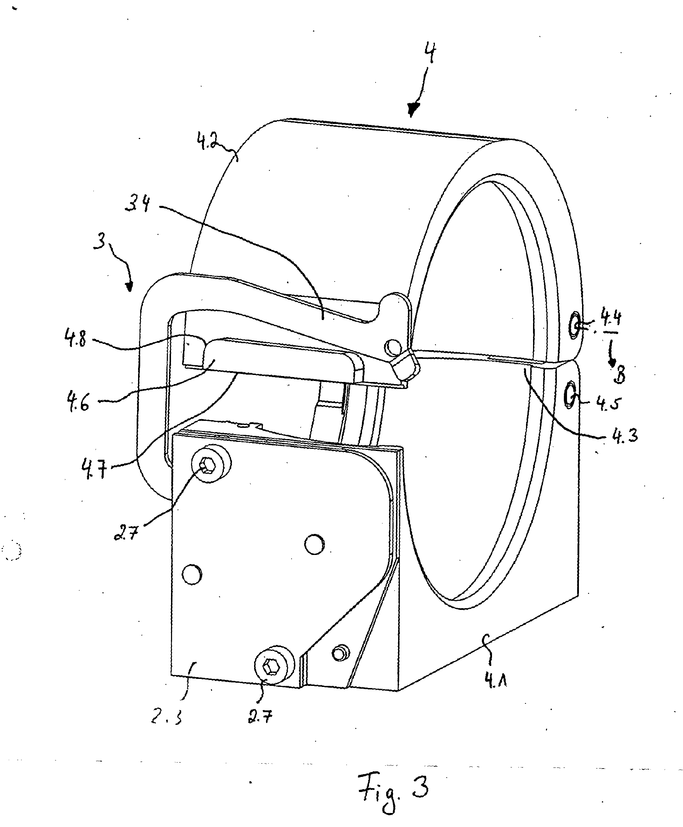

Zum Öffnen muss der Stift mittels eines Werkzeugs wieder eingedrückt werden und der Hebel in Öffnungsrichtung bewegt werden, bis der Kantenbereich der Bohrung 3.6 an der Fase 2.6.1 des Stiftes 2.6 anliegt. Da kann das Werkzeug entfernt und der Hebel unter weiterem Zurückdrücken des Stiftes (über die Höhe der Fase) wieder geöffnet werden. Aus der die Schließstellung der erfindungsgemäßen Vorrichtung darstellenden Fig. 2, aber auch der Fig. 3 ist ersichtlich, dass in der Schließstellung die Oberkante 2.0.1 des Grundkörpers 2 und die dieser zugewandte Unterkante 3.1.1 des ersten Hebelarms 3.1 des Hebels 3 parallel zueinander verlaufen. In den zwischen den beiden genannten Kanten 2.0.1 und 3.1.1 genannten Zwischenraum greift ein am zweiten Bauteil vorzusehendes Widerlager ein, so dass das zweite Bauteil über dieses Widerlager in Schließstellung gegen das erste Bauteil gedrückt wird (Fig. 3 bis 5).

Anhand der Fig. 3 bis 5 ist der Einsatz der erfindungsgemäßen Vorrichtung bei einer Schelle dargestellt.

Die Schelle 4 weist eine erste Schellenhälfte 4.1 als erstes Bauteil und eine zweite Schellenhälfte 4.2 als zweites Bauteil auf. Die beiden Schellenhälften sind an ihrer Anlenkseite 4.3 zum Beispiel über einen Doppelgelenk-Anlenkmechanismus aneinander schwenkbar angelenkt, indem die Verbindungslaschen 4.3 über Gelenke 4.4 und 4.5 jeweils an einem Schellenteil 4.1, 4.2 angelenkt sind. Derart kann das zweite Schellenteil 4.2 vom ersten Schellenteil 4.1 fort und nach hinten geklappt werden. Die erfindungsgemäße Vorrichtung zum Schließen ist mittels der Schraubelemente 2.5 - hier in Form von Imbusschrauben - an dem ersten Schellenteil 4.1 erstes Bauteil in einem dem Anlenkbereich gegenüberliegenden Bereich befestigt. Das zweite Schellenteil 4.2 - zweites Bauteil - weist an seinem freien - dem Anlenkbereich ebenfalls gegenüberliegenden - Ende auf der Außenseite ein Widerlager 4.6 auf, das auf seiner der freien Kante 4.7 des zweiten Schellenteils 4.2 abgewandten Eckbereichen mit Abrundungen 4.8 versehen ist.

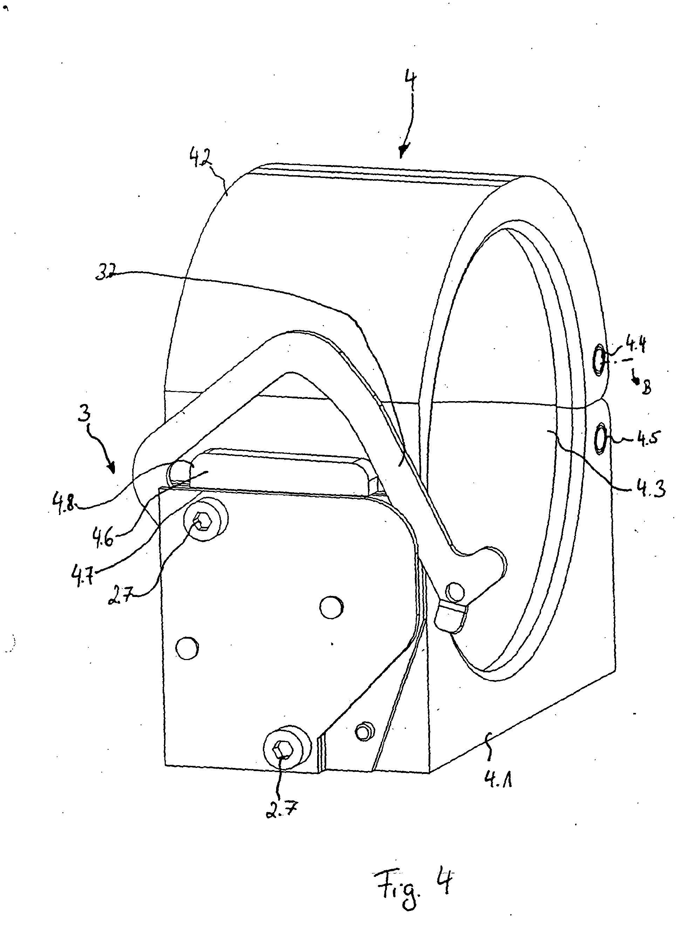

Soll die Schelle 4 nun durch die erfindungsgemäße Vorrichtung zum Schließen geschlossen werden, so greift, wenn der Hebel 3 aus seiner vollständigen Öffnungsstellung - Fig. 1 - in eine erste Zwischen-Schließstellung gebracht wird, wie diese in Fig. 3 dargestellt ist, wird der andere dem freien Ende zugewandte Bereich der Innenkante des Hebelarmabschnitts 3.4 an der rechten abgerundeten Kante 4.8 des Widerlagers 4.6 an und drückt bei weiterer Schließbewegung über das Widerlager 4.6 das zweite Schellenteil 4.1 gegen das erste Schellenteil 4.2, während der zweite Hebelarm 3.2, 3.4 an der rechten abgerundeten Kante 4.8 des Widerlagers 4.6 entlanggleitet, bis ein Bereich der Unterkante 3.1.1 des ersten Hebelarms 3.1 an der rechten abgerundeten Kante 4.8 des Widerlagers 6 zur Anlage kommt (etwa in Fig. 4) und derart ebenfalls am Widerlager 4.6 angreifend dieses und damit das zweite Schellenteil 4.2 gegen das erste Schellenteil 4.1 herunterdrückt. Bei weiterer Schließbewegung gelangt, wie schon unter Bezug auf Fig. 1 beschrieben, die freie Kante des angewinkelten Ansatz 3.8 am zweiten Hebelarm 3.2 in den Bereich der Fase 2.6.1 des Stiftes 2.6, drückt diesen nach unten, bis er wieder in die Bohrung 3.6 einschnappen kann, womit der Schließvorgang vollendet ist.

### Bezugszeichenliste

- 1: Erfindungsgemäße Vorrichtung
- 2: Grundkörper
- 2.0.1: Kanten
- 2.1: Tragplatte
- 2.2: Distanzplatte
- 2.3: Abdeckplatte
- 2.4: Nieten
- 2.5: Schraubenelemente
- 2.6: Stift
- 2.6.1: Fase
- 3: Schwenkhebel
- 3.1: Hebelarm
- 3.1.1: Unterkante
- 3.2: Hebelarm
- 3.4: Abschnitt
- 3.5: Ansatz
- 3.6: Nocken
- 3.7: Betätigungsansatz
- 3.8: Ansatz
- 4: Schelle
- 4.1: Schellenteil
- 4.2: Schellenteil
- 4.3: Verbindungslaschen
- 4.4: Gelenk
- 4.5: Gelenk
- 4.6: Widerlager
- 4.7: freie Kante
- 4.8: Abrundungen

## Patentansprüche

1. Schließvorrichtung mit einem Grundkörper und einem am Grundkörper (2) angelenkten Hebel (3) mit zwei in etwa gleichlang ausgebildeten Hebelarmen (3.1, 3.2), deren einer (3.1) an seinem freien Ende am Grundkörper (2) angelenkt ist, während der andere (3.2) mit seinem freien Ende in Schließstellung am Grundkörper (2) lösbar befestigbar ist, **dadurch gekennzeichnet, dass** der Grundkörper an einem ersten Bauteil (2.3) befestigbar ist, dass die beiden Hebelarme (3.1, 3.2) rechtwinklig zueinander angeordnet sind und dass der Hebel (3) über ein Widerlager an einem zweiten Bauteil dieses zum Schließen der Bauteile in Schließstellung gegen das erste Bauteil drückt.

2. Schließvorrichtung nach Anspruch 1, **dadurch gekennzeichnet, dass** der erste Hebelarm (3.1) über einen kurzen abgewinkelten Ansatz (3.5) am Grundkörper angelenkt ist.

3. Schließvorrichtung nach Anspruch 2, **dadurch gekennzeichnet, dass** der abgewinkelte Ansatz (3.5) im wesentlichen parallel zum zweiten (3.2) Hebelarm verläuft.

4. Schließvorrichtung nach Anspruch 2 oder 3, **dadurch gekennzeichnet, dass** der abgewinkelte Ansatz (3.5) mit seinem freien Ende am Grundkörper angelenkt ist.

5. Schließvorrichtung nach einem der Ansprüche 2 bis 4, **dadurch gekennzeichnet, dass** der abgewinkelte Ansatz (3.5) mit einem exzentrischen Nocken (3.6) im Bereich der Anlenkung versehen ist, der in maximaler Offenstellung des Hebels die Oberkante des Grundkörpers überragt.

6. Schließvorrichtung nach einem der vorangehenden Ansprüche, **gekennzeichnet durch** eine Sperreinrichtung in Form eines parallel zur Schwenkachse des Hebels ausgerichteten, nachgiebig gelagerten Stiftes (2.6) und eine diesen umgreifenden Bohrung (3.6) am freien Ende des Hebelarms.

7. Schließvorrichtung nach Anspruch 6, **dadurch gekennzeichnet, dass** das freie Ende des zweiten Hebels (3.2) einen abgewinkelten Ansatz (3.8) aufweist, wobei der Abstand der freien Kante des Ansatzes (3.8) der Höhe des aus einer Tragplatte (2.1) des Grundkörpers (2) ragenden Stiftes (2.6) entspricht.

8. Schließvorrichtung nach einem der vorangehenden Ansprüche, **dadurch gekennzeichnet, dass** der zweite Hebelarm (3.2) an seinem freien Ende einen Griffansatz (3.7) aufweist.

9. Schließvorrichtung nach einem der vorangehenden Ansprüche, **dadurch gekennzeichnet, dass** der Grundkörper (2) zumindest eine flache Grundplatte (2.1) aufweist, an der der Hebel (3) angelenkt ist.

10. Schließvorrichtung nach einem der vorangehenden Ansprüche, **dadurch gekennzeichnet, dass** der Hebel (3) aus Flachmaterial besteht.

11. Schließvorrichtung nach einem der Ansprüche 9 oder 10, **dadurch gekennzeichnet, dass** der Grundkörper (2) eine Abdeckplatte (2.3) aufweist, die auf der der Grundplatte (2.1) abgewandten Seite des Hebels (3) angeordnet ist.

12. Schließvorrichtung nach Anspruch 11, **dadurch gekennzeichnet, dass** zwischen Grund- und Abdeckplatte (2.1, 2.3) eine Distanzplatte (2.2) angeordnet ist.

13. Schließvorrichtung nach einem der vorangehenden Ansprüche, **dadurch gekennzeichnet, dass** Grundkörper (2) und/oder Hebel (3) aus Kunststoff bestehen.

14. Schließvorrichtung nach einem der vorangehenden Ansprüche, **dadurch gekennzeichnet, dass** Grundkörper (2) und/oder Hebel (3) aus Metall bestehen.

15. Schließvorrichtung nach einem der Ansprüche 9 bis 14, **dadurch gekennzeichnet, dass** Einzelteile des Grundkörpers (2) miteinander verklebt sind.

16. Schließvorrichtung nach einem der Ansprüche 9 bis 14, **dadurch gekennzeichnet, dass** Einzelteile des Grundkörpers (2) miteinander verschweißt sind.

17. Schließvorrichtung nach einem der Ansprüche 9 bis 14, **dadurch gekennzeichnet, dass** Einzelteile des Grundkörpers (2) miteinander vernietet sind.

18. Schließvorrichtung nach einem der Ansprüche 9 bis 11, **dadurch gekennzeichnet, dass** Einzelteile des Grundkörpers (2) miteinander verschraubt sind.

19. Schließvorrichtung nach einem der vorangehenden Ansprüche, **dadurch gekennzeichnet, dass** die Schwenkachse (A) des Schließhebels (3) senkrecht zu einer Schwenkachse (A) der zu schließenden Bauteile gerichtet ist.

20. Schelle, **gekennzeichnet durch** eine Schließvorrichtung mit zwei aneinander schwenkbar angelenkter Schellenhälften und mit einem Grundkörper und einem am Grundkörper (2) angelenkten Hebel (3) mit zwei in etwa gleichlang ausgebildeten Hebelarmen (3.1, 3.2), deren einer (3.1) an seinem freien Ende am Grundkörper (2) angelenkt ist, während der andere (3.2) mit seinem freien Ende in Schließstellung am Grundkörper (2) lösbar befestigbar ist, wobei der Grundkörper an einem ersten Bauteil (2.3) befestigbar ist, die beiden Hebelarme (3.1, 3.2) rechtwinklig zueinander angeordnet sind und der Hebel (3) über ein Widerlager an einem zweiten Bauteil dieses zum Schließen der Bauteile in Schließstellung gegen das erste Bauteil drückt.

21. Schelle nach Anspruch 20, **dadurch gekennzeichnet, dass** die Schwenkachse des Schließhebels (3) senkrecht zu der oder den Anlenkachsen der beiden Bauteile (4.1, 4.1) der Schelle (4) aneinander ausgerichtet ist.

22. Schelle nach Anspruch 20 oder 21, **gekennzeichnet durch** eine Schließvorrichtung nach einem der Ansprüche 2 bis 19.

## Claims

1. Locking device having a body and a lever (3) having two roughly equally long lever arms (3.1, 3.2) articulated to said body (2) and whereof one (3.1) is articulated by its free end to the body (2), whereas the other (3.2) is detachably fixable by its free end in the locked position to the body (2), **characterized in that** the body can be fixed to a first component (2.3), that the two lever arms (3.1, 3.2) are at right angles to one another and that the lever (3) by means of an abutment on a second component presses the latter against the first component for locking the components in the locked position.

2. Locking device according to claim 1, **characterized in that** the first lever arm (3.1) is articulated to the body by means of a short, angled shoulder (3.5).

3. Locking device according to claim 2, **characterized in that** the angled shoulder (3.5) is substantially parallel to the second lever arm (3.2).

4. Locking device according to claim 2 or 3, **characterized in that** the free end of the angled shoulder (3.5) is articulated to the body.

5. Locking device according to one of the claims 2 to 4, **characterized in that**, in the vicinity of the articulation, the angled shoulder (3.5) is provided with an eccentric cam (3.6) and in the maximum open position of the lever projects over the upper edge of the body.

6. Locking device according to one of the preceding claims, **characterized by** an arresting device in the form of a flexibly mounted pin (2.6) oriented parallel to the pivoting axis of the lever and a bore (3.6) embracing the same at the free end of the lever arm.

7. Locking device according to claim 6, **characterized in that** the free end of the second lever arm (3.2) has an angled shoulder (3.8), the spacing of the free edge of the shoulder (3.8) corresponding to the height of the pin (2.6) projecting from a mounting plate (2.1) of body (2).

8. Locking device according to one of the preceding claims, **characterized in that** on the free end of the second lever arm (3.2) is provided a gripping shoulder (3.7).

9. Locking device according to one of the preceding claims, **characterized in that** the body (2) has at least one flat mounting plate (2.1) to which the lever (3) is articulated.

10. Locking device according to one of the preceding claims, **characterized in that** the lever (3) comprises flat material.

11. Locking device according to one of the claims 9 or 10, **characterized in that** the body (2) has a cover plate (2.3) located on the side of lever (3) remote from mounting plate (2.1).

12. Locking device according to claim 11, **characterized in that** a spacing plate (2.2) is placed between the mounting and cover plates (2.1, 2.3).

13. Locking device according to one of the preceding claims, **characterized in that** the body (2) and/or lever (3) are made from plastic.

14. Locking device according to one of the preceding claims, **characterized in that** the body (2) and/or lever (3) are made from metal.

15. Locking device according to one of the claims 9 to 14, **characterized in that** elements of the body (2) are bonded together.

16. Locking device according to one of the claims 9 to 14, **characterized in that** elements of the body (2) are welded together.

17. Locking device according to one of the claims 9 to 14, **characterized in that** elements of the body (2) are riveted together.

18. Locking device according to one of the claims 9 to 14, **characterized in that** elements of the body (2) are screwed together.

19. Locking device according to one of the preceding claims, **characterized in that** the pivoting axis (A) of locking lever (3) is directed perpendicular to a pivoting axis (A) of the components to be locked.

20. Clamp, **characterized by** a locking device having two clamp halves pivotably articulated to one another and having a body and a lever (3) with two roughly equally long lever arms (3.1, 3.2) articulated to the body (2) and whereof one (3.1) is articulated by its free end to body (2), whereas the other (3.2) can be detachably fixed by its free end in the locked position to the body (2), the body being fixable to a first component (2.3), the two lever arms (3.1, 3.2) are at right angles to one another and by means of an abutment on a second component the lever (3) presses the latter against the first component for locking the components in the locked position.

21. Clamp according to claim 20, **characterized in that** the pivoting axis of the locking lever (3) is oriented perpendicular to the articulation axis or axes of the two components (4.1, 4.2) of clamp (4).

22. Clamp according to claim 20 or 21, **characterized by** a locking device according to one of the claims 2 to 19.

## Revendications

1. Dispositif de fermeture comprenant une pièce de base et un levier (3) articulé à la pièce de base (2) présentant deux bras de levier (3.1, 3.2) à peu près de même longueur, dont l'un (3.1) est articulé par son extrémité libre à la pièce de base (2), tandis que l'autre (3.2) est monté amovible par son extrémité libre en position de fermeture sur la pièce de base (2), **caractérisé en ce que** la pièce de base est fixée à un premier composant (2.3), **en ce que** les deux bras de levier (3.1, 3.2) sont perpendiculaires l'un à l'autre et **en ce que** le levier (3) force un deuxième composant, par l'intermédiaire d'une butée sur celui-ci, en position de fermeture contre le premier composant pour les fermer.

2. Dispositif de fermeture selon la revendication 1, **caractérisé en ce que** le premier bras de levier (3.1) est articulé à la pièce de base par l'intermédiaire d'un court épaulement coudé (3.5).

3. Dispositif de fermeture selon la revendication 2, **caractérisé en ce que** l'épaulement coudé (3.5) s'étend sensiblement parallèle au deuxième bras de levier (3.2).

4. Dispositif de fermeture selon la revendication 2 ou 3, **caractérisé en ce que** l'épaulement coudé (3.5) est articulé à la pièce de base par son extrémité libre.

5. Dispositif de fermeture selon l'une quelconque des revendications 2 à 4, **caractérisé en ce que** l'épaulement coudé (3.5) présente une came (3.6) excentrée dans la zone de l'articulation qui, dans la position d'ouverture maximale du levier, dépasse le bord supérieur de la pièce de base.

6. Dispositif de fermeture selon l'une quelconque des revendications précédentes, **caractérisé par** un dispositif de blocage sous la forme d'une broche (2.6) s'étendant parallèle à l'axe de pivotement du levier et montée flexible, et d'un perçage (3.6) entourant celle-ci à l'extrémité libre du bras de levier.

7. Dispositif de fermeture selon la revendication 6, **caractérisé en ce que** l'extrémité libre du deuxième bras de levier (3.2) présente un épaulement coudé (3.8), l'écart du bord libre de l'épaulement (3.8) correspondant à la hauteur de la broche (2.6) faisant saillie hors d'une plaque d'appui (2.1) de la pièce de base (2).

8. Dispositif de fermeture selon l'une quelconque des revendications précédentes, **caractérisé en ce que** le deuxième bras de levier (3.2) présente à son extrémité libre un épaulement d'actionnement (3.7).

9. Dispositif de fermeture selon l'une quelconque des revendications précédentes, **caractérisé en ce que** la pièce de base (2) présente au moins une plaque de base (2.1) plane à laquelle le levier (3) est articulé.

10. Dispositif de fermeture selon l'une quelconque des revendications précédentes, **caractérisé en ce que** le levier (3) est réalisé dans un matériau plat.

11. Dispositif de fermeture selon l'une quelconque des revendications 9 ou 10, **caractérisé en ce que** la pièce de base (2) présente une plaque de couverture (2.3) disposée sur la face du levier (3) opposée à la plaque de base (2.1).

12. Dispositif de fermeture selon la revendication 11, **caractérisé en ce qu'**une plaque entretoise (2.2) est disposée entre la plaque de base (2.1) et la plaque de couverture (2.3).

13. Dispositif de fermeture selon l'une quelconque des revendications précédentes, **caractérisé en ce que** la pièce de base (2) et/ou le levier (3) sont en matière plastique.

14. Dispositif de fermeture selon l'une quelconque des revendications précédentes, **caractérisé en ce que** la pièce de base (2) et/ou le levier (3) sont en métal.

15. Dispositif de fermeture selon l'une quelconque des revendications 9 à 14, **caractérisé en ce que** des pièces composantes de la pièce de base (2) sont collées ensemble.

16. Dispositif de fermeture selon l'une quelconque des revendications 9 à 14, **caractérisé en ce que** des pièces composantes de la pièce de base (2) sont soudées ensemble.

17. Dispositif de fermeture selon l'une quelconque des revendications 9 à 14, **caractérisé en ce que** des pièces composantes de la pièce de base (2) sont rivetées ensemble.

18. Dispositif de fermeture selon l'une quelconque des revendications 9 à 14, **caractérisé en ce que** des pièces composantes de la pièce de base (2) sont vissées ensemble.

19. Dispositif de fermeture selon l'une quelconque des revendications précédentes, **caractérisé en ce que** l'axe de pivotement (A) du levier de fermeture (3) s'étend perpendiculaire à un axe de pivotement (A) des éléments de construction à fermer.

20. Bride de fixation **caractérisée par** un dispositif de fermeture comprenant deux moitiés de bride articulées à pivotement l'une à l'autre, une pièce de base et un levier (3) articulé à la pièce de base (2) présentant deux bras de levier (3.1, 3.2) à peu près de même longueur, dont l'un (3.1) est articulé par son extrémité libre à la pièce de base (2), tandis que l'autre (3.2) est monté amovible par son extrémité libre en position de fermeture sur la pièce de base (2), la pièce de base étant fixée à un premier composant (2.3), les deux bras de levier (3.1, 3.2) étant perpendiculaires l'un à l'autre et le levier (3) forçant un deuxième composant, par l'intermédiaire d'une butée sur celui-ci, en position de fermeture contre le premier composant pour les fermer.

21. Bride selon la revendication 20, **caractérisée en ce que** l'axe de pivotement du levier de fermeture (3) s'étend perpendiculaire à l'axe ou aux axes d'articulation des deux éléments de construction (4.1, 4.2) de la bride (4).

22. Bride selon la revendication 20 ou 21, **caractérisée par** un dispositif de fermeture selon l'une quelconque des revendications 2 à 19.
